# EUROPEAN PATENT APPLICATION

(11) **EP 2 339 501 A1**
(43) Date of publication of application: **29.06.2011**
(21) Application number: 09290984.5
(22) Date of filing: 21.12.2009
(51) Int. Cl.: G06K 7/00

(54) **Near field communication devices**

(71) Applicant: NXP B.V., 5656 AG Eindhoven (NL)
(72) Inventor: Audic, Jean-Philippe, Redhill, Surrey RH1 1DL (GB); Geslin, Jeremy, Redhill, Surrey RH1 1DL (GB); Perennes, Patrick, Redhill, Surrey RH1 1DL (GB)
(74) Representative: Hardingham, Christopher Mark

(57) **Abstract**

A contactless near field communications reader device detects the presence by providing detection pulses to an antenna using a transmitter circuit. A current drawn by the transmitter circuit during the transmission of the detection pulses is monitored and the presence of a tag is detected based on the monitored current drawn by the transmitter circuit.

This enables the detection of a tag using short pulses, therefore consuming low energy, and which can be implemented with simple circuitry.

## Description

This invention relates to near field communication (NFC) devices, including RFID systems, which provide data transmissions over inductively coupled antennas.

NFC applications are targeting consumer products and especially battery-powered products such as mobile phones, PDAs and Laptops. At least one device functions as a reader, and the other functions as a tag. The tag can for example comprise a contactless smart card, contactless RFID tag, or contactless electronic badge.

An NFC-enabled product can have three different behavior modes:
- Card mode, in which it functions as the tag and responds to commands sent by an external reader;
- Reader/Writer mode, in which functions as the reader device and sends commands to an external tag;
- Peer-to-Peer mode in which it exchanges some data with another NFC device also configured in peer-to-peer mode.

The reader device in such arrangements has an antenna coil for emitting an oscillating magnetic field, and is arranged to detect the presence of a contactless integrated circuit (hereinafter simply referred to as a "tag") within a communication perimeter of the reader.

The detection of a tag typically involves an identification request that must be repeatedly sent out by the reader. Upon receiving such a request, the tag present in the interrogation field of the reader sends back an identification message. The identification message can be personalised and comprise an identification number of the tag, such as its serial number or any other identifier. The identification message can also be a simple anonymous identification signal, such as a period of modulation of the amplitude of the magnetic field performed by load modulation. In applications in which several tags are likely to be within the communication perimeter of a reader simultaneously, the identification request is coupled with an anti-collision protocol whereby one and only one integrated circuit can be selected.

Unfortunately, generating the RF magnetic field requires several hundreds of milliwatts and the field has to be ON for a large amount of time (tens of milliseconds).

As a result, it is not suitable for applications in which it is desirable for the current consumed by the reader to be low when no integrated circuit is within the interrogation field. These applications particularly relate to readers powered by a battery or an electric cell.

To save power, it can be arranged that this "seeking" mode is not always enabled; this requires an action from the user: either push a dedicated button to trigger this mode, or go through the right menu in the Man Machine Interface (MMI).

However, this goes against one of the key concepts of NFC, namely to simplify the complexity of user interaction with the products. It is the "magic touch" initiative: the user only has to bring the NFC-enabled product close to another one (tag, reader or peer) and they can start communicating with each other without any additional user action.

An alternative is for the tag to spontaneously send an identification message when it detects the presence of a magnetic field emitted by a reader. This mode of detection by spontaneous identification also involves considerable current being consumed since the reader must emit a permanent magnetic field or magnetic field bursts long enough to activate the tag and enable it to send the identification message (which can consist of a simple identification signal, as indicated above).

US 2004/0256460 discloses an arrangement in which a tag is detected based on the fact that the amplitude of the magnetic field emitted by a reader is substantially altered when the antenna coil of a tag is within the communication perimeter of the reader. When a tag is close to the reader, the antenna coil of the tag interferes with the coil of the reader as a result of mutual inductance, which substantially de-tunes the antenna circuit of the reader.

The amplitude of the magnetic field is monitored by extracting a voltage magnitude envelope signal from the antenna coil. Thus, short magnetic field pulses which only cause insignificant current consumption can be sent, and the amplitude of the envelope signal is detected. When the amplitude of the envelope signal has a variation higher than a determined threshold or a determined attenuation, a tag is detected.

This detection process requires analysis of a signal at the antenna using receiving circuitry as well as provision of a signal to the antenna using transmission circuitry. Thus, there are still limits to the power savings made possible by the detection process

According to the invention, there is provided a contactless near field communications reader device for detecting the presence of a tag and communicating with the tag, comprising:
an antenna;
a control circuit for providing transmission signals to the antenna, including detection pulses, wherein the control circuit comprises a transmitter circuit; and
means for monitoring a current drawn by the transmitter circuit during the transmission of the detection pulses,
wherein the control circuit is adapted to detect the presence of a tag based on the monitored current drawn by the transmitter circuit.

This enables the detection of a tag using short pulses, therefore consuming low energy, and which can be implemented with simple circuitry. Indeed, a conventional antenna and peripheral circuitry can be used.

The receiver front end circuitry is not involved in the analysis, so it can potentially be powered off during the detection process, giving the possibility of additional power savings. The transmitter current detection can be implemented using existing current measurement capability which may typically already be provided in the IC, for protecting the supply regulator against over-current (for example in the case of failure on the antenna).

The detection pulses can comprise electromagnetic pulses of duration less than 500µs, or even less than 150µs (for example as low as 100 µs). Thus, they can result in low energy consumption, and are thus shorter than are typically used for identification or communication purposes. The pulses are spaced, for example the order of hundreds of milliseconds apart.

A matching circuit and an EMC filter are preferably coupled between the control circuit and the antenna.

Upon detection of the presence of a tag, the control circuit is preferably adapted to provide communication transmissions signals. Thus, any conventional tag identification and communication signals and methods can then be employed.

The means for monitoring a current drawn by the transmitter circuit can comprise a current meter integrated with the control circuit. They then define the main reader integrated circuit. However, the current meter can be external to the main control circuit IC and receive an input from it.

The invention also provides a method of detecting the presence of a tag using a contactless near field communications reader device, comprising:
providing detection pulses using a transmitter circuit to an antenna;
monitoring a current drawn by the transmitter circuit during the transmission of the detection pulses; and
detecting the presence of a tag based on the monitored current drawn by the transmitter circuit.
The method can be under the control of a computer program.

An example of the invention will now be described with reference to the accompanying drawings, in which:
Figure 1 shows schematically the components of a known reader;
Figure 2 shows how the transmitter current varies as a function of the tag distance; and
Figure 3 is one example of reader circuit of the invention.

The invention provides a contactless near field communications reader device for detecting the presence of a tag, which detects the effect of mutual inductance between a reader antenna and a tag. A current drawn by the transmitter circuit during the transmission of detection pulses is used as the mechanism for detecting the presence of a tag.

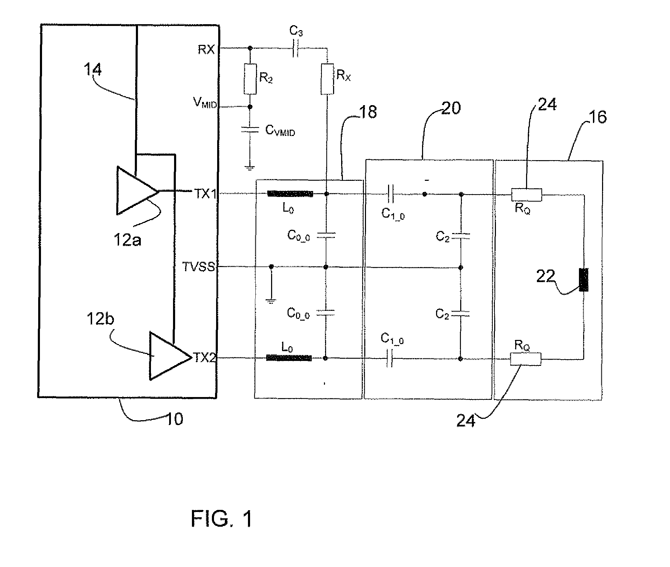

Figure 1 shows schematically the components connected between the Near Field Communication Integrated Circuit and the antenna. The circuit can function both as reader or tag, and therefore also can operate in peer-to-peer mode.

The integrated circuit 10 provides the data modulation as well as reception functions. The operation of the integrated circuit is completely conventional and well known. The features of the integrated circuit which are relevant to this invention are the transmitter amplifiers 12a,12b and their corresponding power supply line 14.

In the example of Figure 1, the antenna 16 is differentially driven, so that there are two transmitter ports TX1 and TX2 and two transmitter amplifiers. The antenna could instead be a single ended antenna with one terminal grounded.

Between the circuit 10 and the antenna 16 is an EMC (electromagnetic compatibility) filter 18 for reducing EMI and a capacitive matching circuit 20 to match the antenna impedance to the EMC filter.

The antenna 16 simply comprises an inductance 22, which is connected in parallel with a capacitance to create resonant circuitry.

A resistor 24 is added in order to have a good control of the antenna quality factor.

The only component that is impacted by the proximity of another antenna is the inductance of the antenna 16. Its value is modified due to the mutual coupling with an external tuned/resonant antenna from a tag.

As outlined above, it has been proposed to detect this mutual coupling effect by monitoring a signal envelope by monitoring a signal (e.g. a voltage) at the antenna. The detected signal is present in the antenna matching circuit and the peripheral circuitry is modified to provide this to the integrated circuit, for example for detection on the receive input RX to the integrated circuit.

This invention is based on the recognition that the modified inductance can be detected based on analysis of the current drawn by the transmitter circuitry, connected to TX1/TX2 pins in the example of Figure 1. Since the inductance is changed, the overall impedance seen from the transmitter outputs (TX1/TX2) is also changed and the current drawn by the transmitter is modified consequently. This means that the signal to be detected is entirely internal within the integrated circuit, thereby providing a simplified implementation.

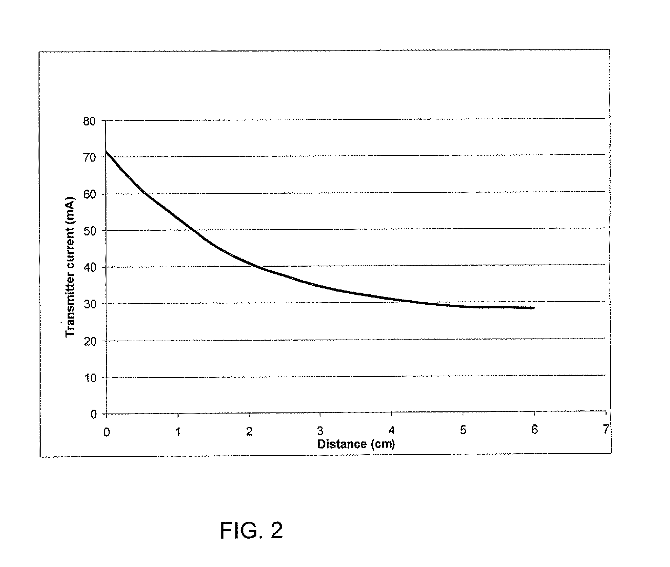

Figure 2 shows a typical current variation on the transmitter as a function of a tag distance from the antenna. The results are based on measurements.

It is clear from this curve that the current varies from 28mA when there is no card in the interrogating field (high distance) up to 72mA when the card is directly on top of the antenna (distance = 0cm). The absolute values depend on the antenna characteristics (inductance, Q-factor ...) and on the tuning components values, but the principle remains the same.

It is simple to build a detection system based on a transmitter current measurement in order to monitor the current and determine if the current variation is strong enough to assume that there is very likely to be a tag in the field.

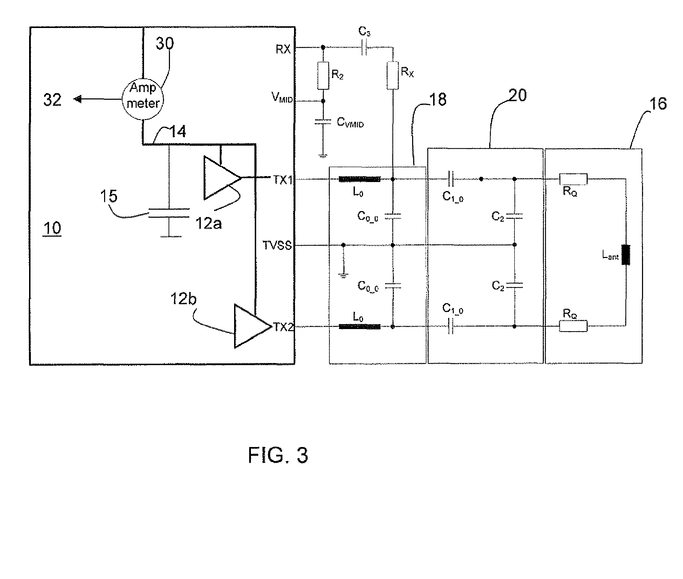

Figure 3 shows an example of circuit of the invention, depicted as a modification to the circuit of Figure 1.

The peripheral circuitry (EMC filter, matching circuit, antenna) is unchanged.

As part of the integrated circuit, circuitry is provided to sense and measure the current drawn by the transmitter (in particular the transmitter amplifiers 12a,12b) when short pulses of electromagnetic field are generated.

A current meter 30 is shown, which provides an output 32 to suitable processing capability of the integrated circuit. Figure 3 also shows an optional decoupling capacitor 15 to assist in the measurement of average current values rather than peak current values. Other components for filtering the current may of course be used, if indeed filtering is required.

The current is monitored and processed to determine if the current change is high enough to assume a tag is detected.

This solution provides monitoring of the changes in the transmitter load (which is the overall antenna circuitry) rather than monitoring information directly on the antenna components.

When polling to detect a card, the field generated comprises short pulses (typically a few hundreds of µs or less) and when the current detection has triggered the presence of a tag, longer field pulses are used (typically more than 5ms) for the identification and data communication processes (in order to comply to the ISO14443/ISO18092/ISO15693 standards).

Thus, the detection pulses are shorter than are used for identification or communication purposes. The pulses are spaced, for example the order of hundreds of milliseconds apart, with the ratio between pulse duration and spacing determining the power consumption. This can be chosen according to the system requirements, for example depending how long an acceptable delay is before a tag is detected.

A false detection will be determined if the subsequent identification process fails to find a tag in range.

The invention is of particular interest for battery operated readers, but it is not limited to these.

The invention can be applied to any inductive coupling based short range communication system, which may include RFID and a range of NFC protocols.

The invention is implemented in the reader device. In systems where one device is always the reader and another is always the tag, only the readers require this functionality. In systems where all devices are multifunctional, and can function as reader and tag, all devices will have the system of the invention enabled.

Various modifications will be apparent to those skilled in the art.

## Claims

1. A contactless near field communications reader device for detecting the presence of a tag and communicating with the tag, comprising:
an antenna (16);
a control circuit (10) for providing transmission signals to the antenna, including detection pulses, wherein the control circuit comprises a transmitter circuit (12a, 12b); and
means (30) for monitoring a current drawn by the transmitter circuit during the transmission of the detection pulses,
wherein the control circuit (10) is adapted to detect the presence of a tag based on the monitored current drawn by the transmitter circuit.

2. A device as claimed in claim 1, wherein the detection pulses comprise electromagnetic pulses of duration less than 500µs.

3. A device as claimed in claim 2, wherein the detection pulses comprise electromagnetic pulses of duration less than 150µs.

4. A device as claimed in any preceding claim, further comprising a matching circuit (20) coupled between the control circuit (10) and the antenna (16).

5. A device as claimed in any preceding claim, further comprising an EMC filter (18) coupled between the control circuit (10) and the antenna (16).

6. A device as claimed in any preceding claim, wherein, upon detection of the presence of a tag, the control circuit (10) is adapted to provide communication transmissions signals.

7. A device as claimed in any preceding claim, wherein the means for monitoring a current drawn by the transmitter circuit comprises a current meter (30) integrated with the control circuit (10).

8. A method of detecting the presence of a tag using a contactless near field communications reader device, comprising:
providing detection pulses using a transmitter circuit (12a,12b) to an antenna (16);
monitoring a current drawn by the transmitter circuit (12a,12b) during the transmission of the detection pulses; and
detecting the presence of a tag based on the monitored current drawn by the transmitter circuit.

9. A method as claimed in claim 8, wherein the detection pulses comprise electromagnetic pulses of duration less than 500µs.

10. A method as claimed in claim 9, wherein the detection pulses comprise electromagnetic pulses of duration less than 150µs.

11. A method as claimed in any one of claims 8 to 10, further comprising, upon detection of the presence of a tag, providing communication signals using the transmitter circuit to the antenna for identification of and/or communication with the tag.

12. A computer program comprising computer program code means adapted to perform the steps of any one of claims 7 to 11 when said program is run on a computer.

13. A computer program as claimed in claim 12 embodied on a computer readable medium.
